# EUROPEAN PATENT APPLICATION

(11) **EP 1 094 291 A2**
(43) Date of publication of application: **25.04.2001**
(21) Application number: 00122996.2
(22) Date of filing: 23.10.2000
(51) Int. Cl.: F28D 9/00, B23K 1/00

(54) **Plate heat exchanger**

(30) Priority: 22.10.1999 JP 30136199
(71) Applicant: EBARA CORPORATION, Ohta-ku, Tokyo (JP)
(72) Inventor: Go, Tetsu, Sodegaura-shi, Chiba-ken (JP); Nakahama, Shuhei, Kisarazu-shi, Chiba-ken (JP); Komaki, Tamio, Kamakura-shi, Kanagawa-ken (JP); Ikezaki, Yasuo, Chigasaki-shi, Kanagawa-ken (JP); Sugiyama, Kazunori, Tagata-gun, Shizuoka-ken (JP)
(74) Representative: Wagner, Karl H., Dipl.-Ing.

(57) **Abstract**

Plate heat exchanger (10) comprising a plate assembly (12) having a plurality of heat transfer plates (30) arranged in a stack formation wherein the plates (30) are spaced apart from each other to define heat transfer medium passages between adjacent heat transfer plates. The plate (30) has a plurality of contact portions. The plate heat exchanger (10) further comprises solder (54,56) disposed between and joining the contact portions of the adjacent heat transfer plates (30) so as to integrally join the heat transfer plates (30) thereby forming the plate assembly (12). Selected ones of the heat transfer medium passages allow a first heat transfer medium to flow therethrough and other heat transfer medium passages allow a second heat transfer medium to flow therethrough to thereby enable heat exchange to be effected between the first and second heat transfer media via the heat transfer plates (30). The solder (54) joins the adjacent heat transfer plates (30) which define the first heat transfer medium passage has characteristics suitable for the first heat transfer medium. The solder (56) joining the adjacent heat transfer plates (30) which define the second heat transfer medium passage has characteristics suitable for the second heat transfer medium.

## Description

The present invention relates to a heat exchanger which is used in, for example, a refrigerator. More specifically, the present invention relates to a plate heat exchanger which is comprised of a plate assembly.

As a heat exchanger for effecting heat exchange between two heat transfer media, a heat exchanger comprising a tube provided in a can body, a so-called shell-and-tube type heat exchanger, has been widely used. In addition, a plate heat exchanger having a compact form has also been advantageously used.

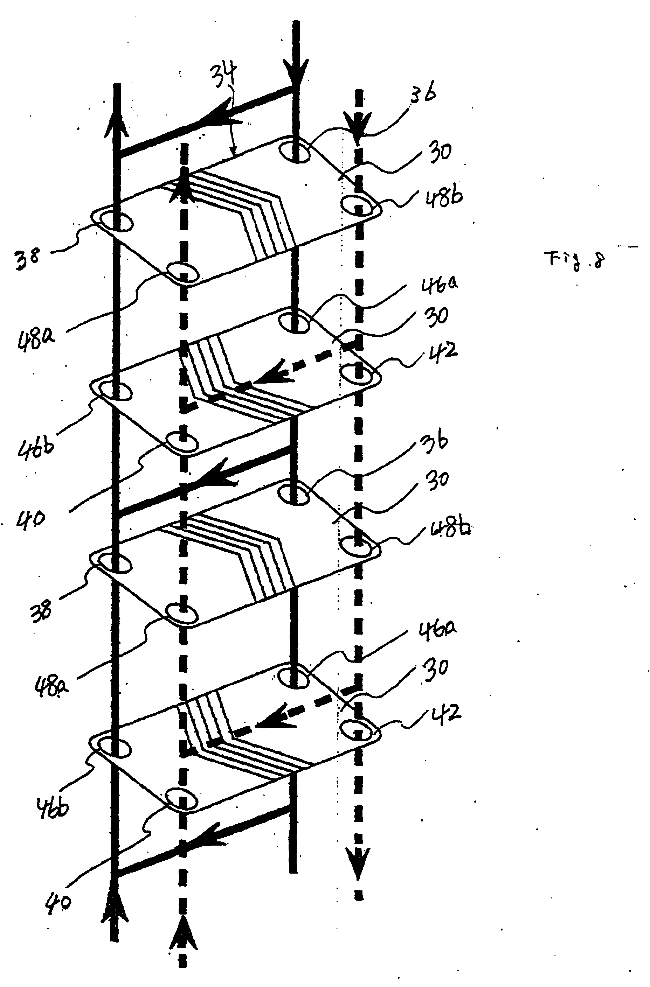

Fig. 8 shows an arrangement of a conventional plate heat exchanger comprising a plate assembly. A central portion of each rectangular plate 30 is provided with a herringbone pattern corrugated portion 34 which consists of rows of slanting ridges, with any two contiguous ridges forming a V, and the rows being positioned on either side of a center longitudinal line of the plate. The herringbone patterns of the adjacent plates are, as shown, formed to extend in opposite directions. Consequently, when the plates 30 are stacked, ridges of adjacent plates 30 intersect and are brought into point contact with each other. Consequently, flow passages R are formed between the plates 30 so as to allow flow of a heat transfer media. The flow passages R have an uneven ceiling and floor which are defined by the ridges of the adjacent plates, to thereby impart turbulence to the flow of a heat transfer media moving through the passage.

Right and left end portions of every first plates 30 (as viewed in Fig. 8) include inlet and outlet openings 36 and 38 for the first heat transfer media, respectively, and left and right end portion of every second plates 30 include inlet and outlet openings 40 and 42 for the first heat transfer media, respectively. Further, right and left end portions of every first plate 30 each include bypass openings 48b and 48a for flow of the second heat transfer media, respectively, while left and right end portions of every second plate 30 each include inlet and outlet openings 46a and 46b for flow of the first heat transfer media, respectively. By this arrangement, as shown in Fig. 8, the first heat transfer media enters each of the first flow passages through the inlet openings, flows through the first flow passages in a leftward direction(as viewed in Fig. 8), and exits through the outlet openings, while the second heat transfer media enters each of the second flow passages through the inlet openings, flows through the second flow passages in a rightwards direction, and exits through the outlet openings.

As a method for producing such a plate assembly, brazing may be employed, instead of using bolts. For example, the plates 30 made of stainless steel are generally joined together using a copper solder made of either pure copper or a copper alloy, with a view to providing a strong and reliable join at low cost.

For example, when plates having a size of 300 mm x 600 mm are used, they are joined by brazing at 1,000 to 2,000 positions including the intersections of the ridges, whereby a high brazing strength is attained. Such brazing is conducted by holding a brazing material in a sheet form between the adjacent plates, thus forming a layered body, with the layered body then being subjected to heating in a furnace. When copper solder is used, a gap between the plate 30 and the brazing material at the brazing position should be maintained at about 0.2 mm.

In a heat exchanger for a refrigerator, it is generally the case that one heat transfer medium will be water with the other being a corrosive liquid such as lithium bromide or ammonia. In such a case, copper solder can not be used as it has low corrosion resistance. Rather, nickel solder, which has a high corrosion resistance can be used.

However, use of nickel solder is used results in a great increase in costs, since the cost of the material is around ten times greater than that of copper. Further, in order to conduct satisfactory brazing, the above-mentioned gap between the plate and brazing material is required to be made smaller than in the case of using copper solder. Therefore, when it is intended to produce a plate assembly using nickel solder, a problem arises in maintaining a satisfactorily small gap, with the result that defects in brazing are likely to occur. Consequently, problems are liable to arise, such as leakage due to low pressure resist strength of the plate assembly, and mixing of two heat transfer media. These problems become pronounced as the size and number of plates employed increases.

In view of the above-stated problems, the present Invention has been made. It is an object of the present Invention to provide a plate heat exchanger which can be obtained at low cost and which has high reliability even when a corrosive liquid is used as a heat transfer medium. It is another object of the present invention to provide a method for producing such a plate heat exchanger.

According to the present invention, there is provided a plate heat exchanger comprising a plate assembly having a plurality of heat transfer plates arranged in a stack formation, the plates being spaced apart from each other to define heat transfer medium passages between adjacent heat transfer plates and having a plurality of contact portions, the plate heat exchanger further comprising solder or brazing filler metal disposed between and joining the contact portions of the adjacent heat transfer plates so as to integrally join the heat transfer plates thereby forming the plate assembly, with selected ones of the heat transfer medium passages allowing a first heat transfer medium to flow therethrough and other heat transfer medium passages allowing a second heat transfer medium to flow therethrough to thereby enable heat exchange to be effected between the first and second heat transfer media via the heat transfer plates, the solder joining the adjacent heat transfer plates which define the first heat transfer medium passage having characteristics suitable for the first heat transfer medium, and the solder joining the adjacent heat transfer plates which define the second heat transfer medium passage having characteristics suitable for the second heat transfer medium.

By the arrangement of the present invention, it has become possible to produce a plate heat exchanger which is able to utilize the characteristics of different types of brazing materials. For example, when one of two heat transfer media has corrosive properties, a corrosion-resistant brazing material such as nickel or nickel alloy solder is used in the flow passage through which the corrosive medium moves, while a conventional brazing material such as a copper solder is used in a flow passage through which the other, non-corrosive medium moves.

The first heat transfer medium passages and the second heat transfer medium passages may be provided in an alternating arrangement. By this arrangement, the compressive strength of the heat exchanger can be maintained at a high level and the cost of a brazing material can be minimized. Since the flow passages for the two types of fluids are arranged in an alternating fashion, a relatively low joining strength of the corrosion-resistant brazing material in one flow passage can be reinforced by the joining strength of the conventional brazing material in an adjacent flow passage. Thus, the heat exchanger as a whole has a relatively high compressive strength. When the plates are made of stainless steel, copper solder, which is not costly and which enables easy brazing and achieves a high joining strength, is used in the flow passages which are not required to have high corrosion resistance. In the flow passages which are required to have high corrosion resistance, nickel solder is used. In order to conduct brazing by way of a single operation, it is preferred to select brazing materials having similar melting points.

According to another aspect of the present invention, there is provided a method for producing a plate heat exchanger comprising the steps of: providing a plurality of heat transfer plates each having a plurality of contact portions; providing first and second types of solder which are suitable for first and second heat transfer media used in the plate heat exchanger, respectively; arranging the heat transfer plates in a stack formation in such a manner that the heat transfer plates are spaced apart from each other to define heat transfer medium passages between the adjacent heat transfer plates while the plurality of contact portions of the adjacent heat transfer plates are brought into contact with each other; disposing the first kind of solder between the contact portions of selected adjacent heat transfer plates; disposing the second kind of solder between the contact portions of other adjacent heat transfer plates; compressing the heat transfer plates provided with the said types of solder , and heating the heat transfer plates provided with the said types of solder while compressing them.

The types of solder may be provided in the form of a sheet and interposed between the adjacent heat transfer plates when the heat transfer plates are arranged in a stack formation. The first kind of solder may be non-corrosion resistant and the second kind of solder may corrosion resistant. Specifically, the first kind of solder is a copper or copper alloy solder and the second kind of solder is a nickel or nickel alloy solder.
Fig. 1 is a cross-sectional view of a heat exchanger according to an embodiment of the present invention, taken along the line I-I in Fig. 2.
Fig. 2a is a front view of the heat exchanger.
Fig. 2b is a plan view of the heat exchanger of Fig. 2a.
Fig. 2c is a bottom view of the heat exchanger of Fig. 2a.
Fig. 3 is a disassembled perspective view of a plate assembly of the heat exchanger of Fig. 1.
Fig. 4 is a perspective view showing a disposition of solder sheets for assembling the plate assembly of the heat exchanger of Fig. 1.
Fig. 5 is a graph showing compressive strength characteristics of the heat exchanger according to the embodiment of the present invention.
Fig. 6 shows an arrangement of a solder sheet according to the embodiment of the present invention.
Fig. 7 is a cross-sectional view of a port portion using the solder sheet of Fig. 6.
Fig. 8 shows a general arrangement of a conventional plate heat exchanger.

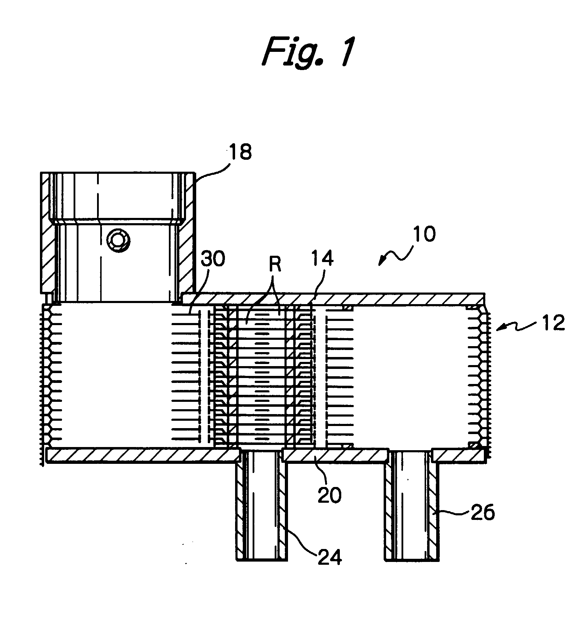

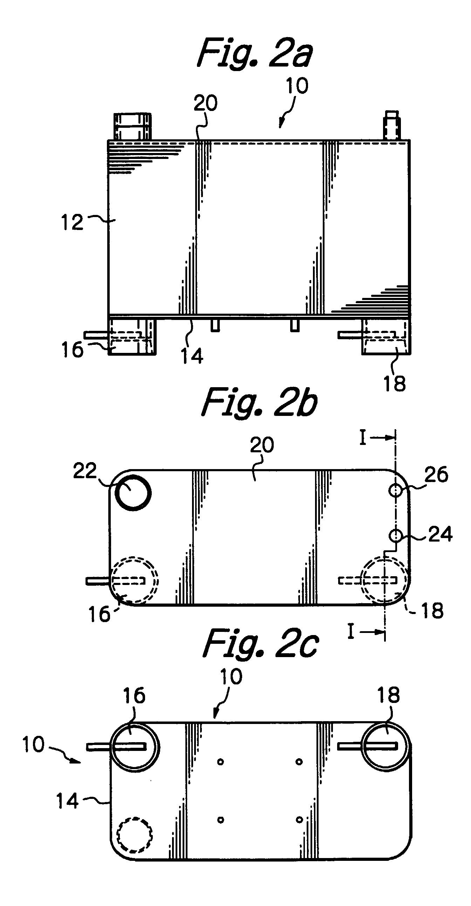

In the following detailed description, certain specific terminology will be employed for the sake of clarity and a particular embodiment described in accordance with the requirements of 35 USA 112, but it is to be understood that the same is not intended to be limiting and should not be so constructed inasmuch as the invention is capable of taking many forms and variations within the scope of the appended claims. Fig. 1 and Figs. 2a to 2c show a plate heat exchanger 10 of the present invention which is applied to an evaporator or condenser for an absorption type refrigerator, in which heat exchange is effected between water and a corrosive cooling medium containing lithium bromide or ammonia. The plate heat exchanger 10 comprises a plate assembly 12 provided between a front panel 14 and a rear panel 20. An inlet opening 16 and an outlet opening 18 for cold or hot water are, respectively, formed at an upper portion and a lower portion of the front panel 14. An inlet/outlet opening 22 for a cooling medium gas is formed at an upper portion of the rear panel 20, and an inlet opening 24 and an outlet opening 26 for a cooling medium liquid are formed at a lower portion of the rear panel 20.

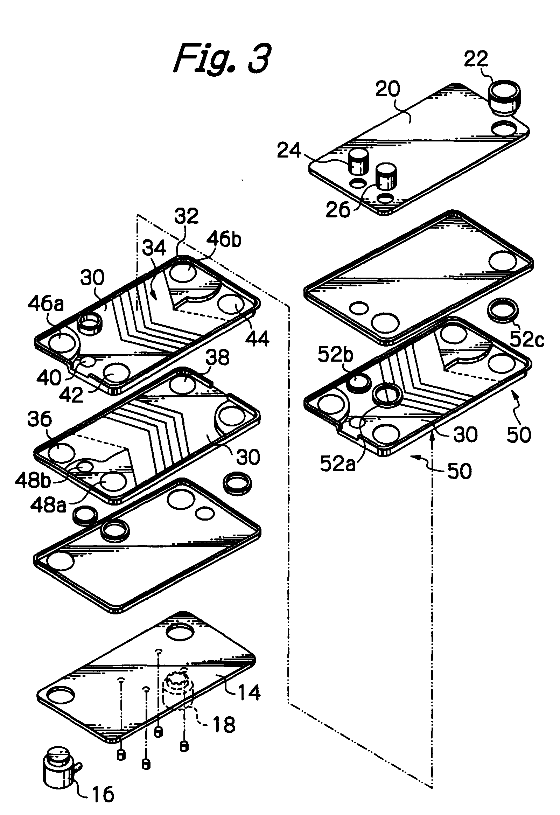

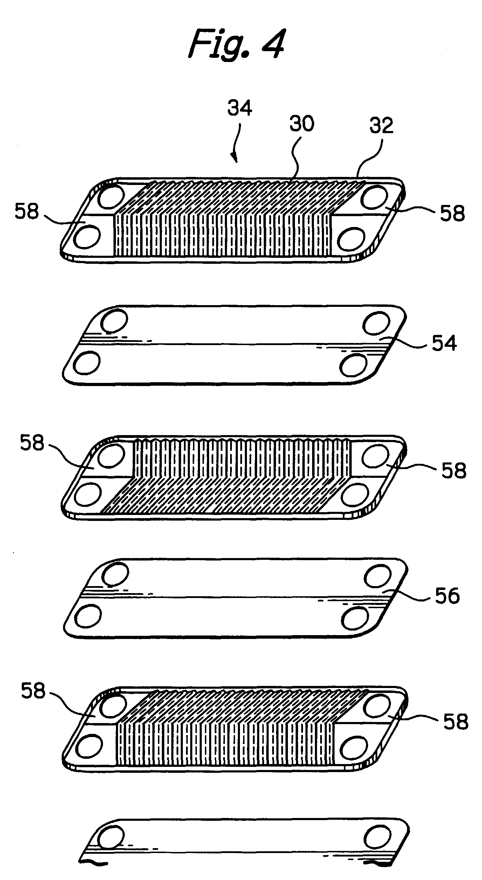

The arrangement and operation of the heat exchanger 10 are basically the same as those of the conventional heat exchanger of Fig. 8, except that the inlet/outlet opening 22 for the cooling medium gas which is generated by evaporation or which is condensed during heat exchange is provided in the heat exchanger 10. The plate assembly 12 is integrally formed by means of brazing. In this embodiment, copper solder is used in the flow passage for cold or hot water, while nickel solder is used in the flow passage for the corrosive cooling medium. The arrangement of the heat exchanger 10 and the method for producing the heat exchanger 10 are described below, with reference to Figs. 3 and 4.

As shown in Fig. 3, each plate 30 comprises an outer edge portion 32 and a central corrugated portion 34. Opposite end portions of the plates 30 are, as is the case in the plates 30 shown in Fig. 8, provided with an inlet opening 36 and an outlet opening 38 for cold or hot water as a first heat transfer medium, bypass passage openings 48a and 48b and an inlet/outlet opening 44 for the cooling medium gas, or an inlet opening 40 and an outlet opening 42 for the cooling medium as a second heat transfer medium, bypass passage openings 48a and 48b and an inlet/outlet opening 44 for the cooling medium gas. These openings are hereinafter referred to as port portions 50. The port portions 50 are located at predetermined positions and provided with ring-like members 52a, 52b and 52c which serve as spacers, and a seal member or the like for forming appropriate fluid passages.

The plate assembly 12 is produced by such a method as is mentioned below. First, the necessary parts are provided at predetermined positions on the plates 30 as shown in Fig. 3 and, as shown in Fig. 4, a copper solder sheet 54 and a nickel solder sheet 56 are alternately arranged to be held individually between the plates 30. Following this, the plates 30, together with the solder sheets 54 and 56, are compressed by means of an appropriate tool. The plates and the solder sheets are then placed in a furnace and heated in a predetermined atmosphere, whereby the solder is caused to fuse and join the plates.

As a material for the copper solder sheet 54, use is made of, for example, a material named BCu-1 in accordance with JIS Z3262 ("copper and brass solder") which has a melting point of 1,083°C. As a material for the nickel solder sheet 56, use is made of, for example, a material named BNi-2 in accordance with JIS Z3265 ("nickel solder") and having a melting point of 970 to 1,000°C. When these materials are used, brazing is conducted at about 1,120°C. The thickness of each of the solder sheets 54 and 56 is in the range of 0.03 to 0.1 mm. Each solder sheet includes a predetermined die-cut pattern so that when the sheets are placed between the plates 30, the solder exists only at a position where brazing is required to be conducted.

In the corrugated portions 34 of the plates 30, as described above, spot brazing is conducted at those positions of the adjacent plates 30 where the ridges intersect and are brought into point contact with each other. IT should be noted that when brazing is insufficient at these positions, the plate assembly is liable to deform as a result of expansion under the pressure exerted by heat transfer media, thereby resulting in leakage of the media. At the port portion 50, connecting peripheral portions 58 having a predetermined width are formed around the openings for the fluids. The solder sheets 54 and 56 are held between the connecting peripheral portions, and brazing is conducted so as to fill any space existing between these portions. It should also be noted that any defect in brazing the connecting peripheral portions would result in mixing of two heat transfer media.

In this embodiment, copper solder and nickel solder are alternately provided between the plates. When a gap is not maintained at a value required for nickel solder in assembling the plate assembly 12, the join between the plates formed by copper solder tends to be stronger than that attained between the plates where nickel solder is used. Consequently, the pressure resist strength of the plate assembly 12 as a whole becomes lower than that which would be obtained if all the plates were brazed by copper solder. If the pressure resist strength of the weakest portion of the plate assembly 12 is taken as representing the pressure resist strength of the plate assembly 12 as a whole, it is close to that which would be obtained if all the plates were brazed by nickel solder.

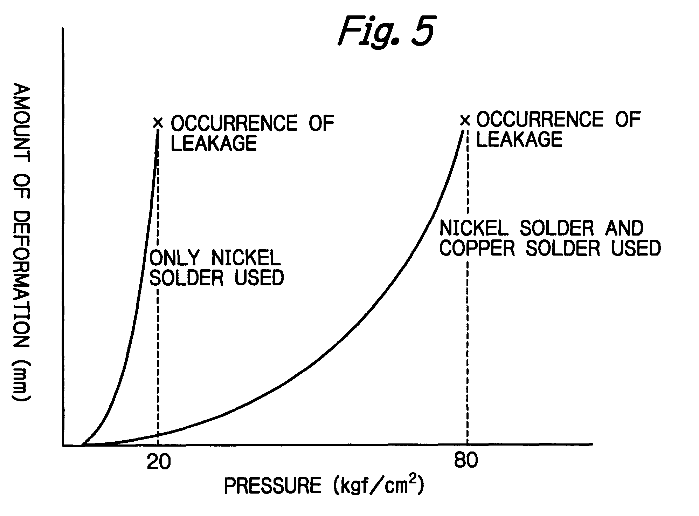

With respect to the pressure resist strength of a plate assembly, the present inventors conducted experiments and obtained results as shown in Fig 5. That is, in a plate assembly in which the plates were all brazed by using nickel solder, leakage occurred at 20 kgf/cm², while in a plate assembly in which copper solder and nickel solder were alternately used, leakage occurred at 80 kgf/cm². Thus, when copper solder and nickel solder were used in an alternating fashion, the compressive strength of the plate assembly was markedly improved as compared to the case when brazing was conducted using only nickel solder. The likely explanation for this is that the nickel solder braising is subject to reinforcement by the copper solder brazing provided on the opposite sides thereof.

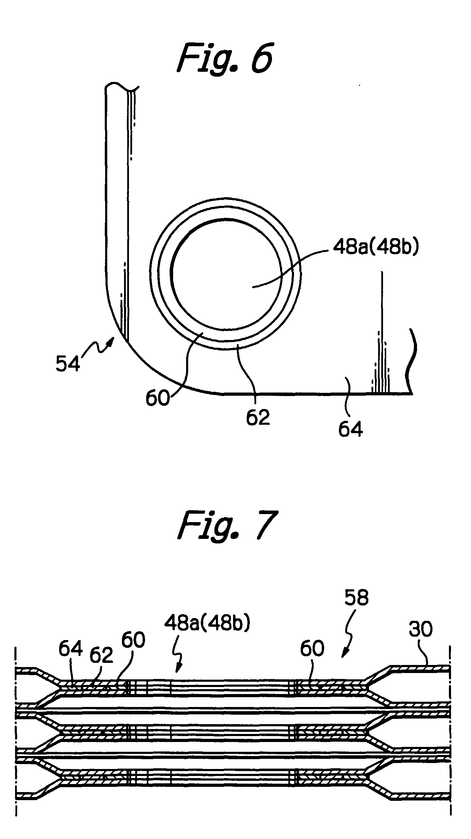

Fig. 6 shows an arrangement of a portion of the copper solder sheet 54 corresponding to the port portion 50 In this embodiment. In the copper solder sheet 54, the portion surrounding a passage opening 48a or 48b for the corrosive cooling medium is provided with nickel solder 60. This nickel solder portion 60 is joined to copper solder 64 on radially inside thereof relative to the passage opening 48a or 48b with a flow preventing material 62 being provided therebetween. By this arrangement, as shown in Fig. 7, the nickel solder is exposed to the opening 48a or 48b, whereby prevention of corrosion of the copper solder due to flow of the corrosive cooling medium can be achieved. As the flow preventing material 62, for example, use can be made of a material obtained by dispersing a powder of titanium oxide in an organic solvent. The arrangement of Fig. 6 can be made by preparing a ring-like nickel solder sheet the inner diameter of which corresponds to the diameter of the passage opening and a copper solder sheet having an opening diameter of which is larger than the inner diameter of the ring-like nickel solder sheet separately and applying a coating of the flow preventing material on the heat transfer plate between the solder sheets. Alternately, there may be employed a composite sheet made of nickel solder and copper solder with the flow preventing material being provided therebetween.

As has been described above, in a plate heat exchanger of the present invention, when a corrosive fluid is used as one of two heat transfer media, a corrosion-resistant brazing material is used in the flow passage for the corrosive fluid, while a conventional brazing material is used in the flow passage for the other medium. In this plate heat exchanger, while high corrosion resistance is imparted to a portion which is required to have high corrosion resistance and high durability is secured, a high pressure resist strength of the plate assembly can be maintained, and the cost of a brazing material can be minimized. Therefore, it is possible to provide a plate heat exchanger which can be obtained at low cost and which has high reliability even when a corrosive liquid is used as a heat transfer medium.

## Claims

1. A plate heat exchanger comprising a plate assembly having a plurality of heat transfer plates arranged in a stack formation, the plates being spaced apart from each other to define heat transfer medium passages between adjacent heat transfer plates and having a plurality of contact portions, the plate heat exchanger further comprising solder disposed between and joining the contact portions of the adjacent heat transfer plates so as to integrally join the heat transfer plates thereby forming the plate assembly, with selected ones of the heat transfer medium passages allowing a first heat transfer medium to flow therethrough and other heat transfer medium passages allowing a second heat transfer medium to flow therethrough to thereby enable heat exchange to be effected between the first and second heat transfer media via the heat transfer plates, the solder joining the adjacent heat transfer plates which define the first heat transfer medium passage having characteristics suitable for the first heat transfer medium, and the solder joining the adjacent heat transfer plates which define the second heat transfer medium passage having characteristics suitable for the second heat transfer medium.

2. A plate heat exchanger as set forth in claim 1, the first heat transfer medium passages and the second heat transfer medium passages being provided in an alternating arrangement.

3. A plate heat exchanger as set forth in claim 1 in which the first heat transfer medium is a non-corrosive fluid and the second heat transfer medium is a corrosive fluid, the solder joining the adjacent heat transfer plates which define the first heat transfer medium passage being made of copper or copper alloy solder and the solder joining the adjacent heat transfer plates at the contact portions which define the second heat transfer medium passage being made of nickel or nickel alloy solder.

4. A plate heat exchanger as set forth in claim 2 in which the first heat transfer medium is a non-corrosive fluid and the second heat transfer medium is a corrosive fluid, the solder joining the adjacent heat transfer plates at the contact portions which define the first heat transfer medium passage being made of copper or copper alloy solder and the solder joining the adjacent heat transfer plates at the contact portions which define the second heat transfer medium passage being made of nickel or nickel alloy solder.

5. A plate heat exchanger as set forth in claim 1 in which the adjacent heat transfer plates having the copper or copper alloy solder interposed therebetween are provided with a hole which extends through the contact portions thereof, with a ring of nickel or nickel alloy solder being provided around the hole to bypass the second heat transfer medium, and the copper or copper alloy solder extending outside the ring.

6. A method for producing a plate heat exchanger comprising the steps of:
providing a plurality of heat transfer plates each having a plurality of contact portions;
providing first and second types of solder which are suitable for first and second heat transfer media used in the plate heat exchanger, respectively;
arranging the heat transfer plates in a stack formation in such a manner that the heat transfer plates are spaced apart from each other to define heat transfer medium passages between the adjacent heat transfer plates while the plurality of contact portions of the adjacent heat transfer plates are brought into contact with each other;
disposing the first kind of solder between the contact portions of selected adjacent heat transfer plates;
disposing the second kind of solder between the contact portions of other adjacent heat transfer plates;
compressing the heat transfer plates provided with the said types of solder , and
heating the heat transfer plates provided with the said types of solder while compressing them.

7. A method as set forth in claim 6 in which:
the said types of solder are provided in the form of a sheet and interposed between the adjacent heat transfer plates when the heat transfer plates are arranged in a stack formation.

8. A method as set forth in claim 7 in which the first kind of solder is non-corrosion resistant and the second kind of solder is corrosion resistant.

9. A method as set forth in claim 8 in which the first kind of solder is a copper or copper alloy solder and the second kind of solder is a nickel or nickel alloy solder.

10. A plate heat exchanger comprising a plate assembly having a plurality of heat transfer plates arranged in a stack formation, the plates being spaced apart from each other to define heat transfer medium passages between adjacent heat transfer plates and having a plurality of contact portions, with selected ones of the heat transfer medium passages allowing a first heat transfer medium to flow therethrough and other heat transfer medium passages allowing a second heat transfer medium to flow therethrough to thereby enable heat exchange to be effected between the first and second heat transfer media via the heat transfer plates.
